# EUROPEAN PATENT APPLICATION

(11) **EP 4 434 595 A2**
(43) Date of publication of application: **25.09.2024**
(21) Application number: 24186212.7
(22) Date of filing: 02.02.2017
(51) Int. Cl.: A63B 24/00

(54) **WEIGHT TRAINING SLED**

(30) Priority: 05.02.2016 US 201662291558 P; 18.03.2016 US 201662310175 P
(62) Divisional of application: 18190480.6
(71) Applicant: Torque Fitness, LLC, Coon Rapids, Minnesota 55433 (US)
(72) Inventor: The designation of the inventor has not yet been filed
(74) Representative: Vossius & Partner Patentanwälte Rechtsanwälte mbB

(57) **Abstract**

A weight training sled **100** characterized by one or more of (A) rotatable wheels **130** in contact with ground, (B) curvilinear push handles **140** with comfortably spaced, and inwardly and/or downwardly angled hand grips **143,** and (C) an elevated tow hook **160.**

## Description

### BACKGROUND

Weight sleds have become an increasingly popular exercise device in indoor health and fitness clubs, many of which have limited open space. Weight sleds, also known as blocking sleds, typically support weights upon one or more skids which exert frictional resistance against movement of the sled. An exemplary traditional weight sled is depicted in US Patent Application Publication 2014/0073492. Weight sleds were originally designed for outdoor use where space and the damage caused by the frictional sliding of the skids against the ground were of little concern. The transition from outdoor to indoor use has come with certain challenges, including the need for substantial open space and installation of flooring that can withstand the abrasive effects of repetitive frictional sliding of the skids over the flooring.

Wheeled version of blocking sleds are depicted in US Patents 3,326,553 (a three wheeled skid-steer version) and 6,942,585 (a single wheel version) whereby frictional skidding is substantially eliminated, but at the expense of a loss in stability when pushing the sled - resulting in the need for an onboard operator to steer the sled of US Patent 3,326,553, or the need for additional space to accommodate the uncontrolled instability of the sled of US Patent 6,942,585.

Accordingly, a need exists for a weight sled designed for safe, nondestructive use in a confined indoor space.

Furthermore, traditional weight sleds suffer from a tendency to tilt forward during use, with the user lifting the work end of the sled (*i.e.,* the end contacted by the exerciser) off the ground resulting in a loss of traction. While desired for certain limited training exercises, such as the teaching of proper blocking technique where application of a lifting force vector is desired, this variable decrease in traction is generally disfavored as it decreases the resistive exercise value of the sled.

Accordingly, a need also exists for a weight sled that remains fully and firmly in resistive contact with the ground during normal and intended use.

### SUMMARY OF THE INVENTION

The invention is directed to a weight training sled.

In a first embodiment, the weight training sled is a wheeled weight training sled that includes (a) a chassis having longitudinally spaced first and second ends and laterally spaced first and second sides, (b) at least two longitudinally spaced, fixed-directional wheels for supporting the chassis upon a surface and rotatable for effecting reciprocating travel of the chassis along a substantially linear longitudinal path, (c) a brake for applying bidirectional resistance to rotation of at least one of the wheels, and (d) a pair of laterally spaced push handles extending upward from proximate a first longitudinal end of the chassis.

A preferred version of the first embodiment of the wheeled weight training sled is a tandem axle four wheeled weight training sled that include (a) a chassis having longitudinally spaced first and second ends and laterally spaced first and second sides, (b) a pair of wheels mounted on each of two axles, the wheels supporting the chassis upon a surface and rotatable for effecting reciprocating travel of the chassis along a longitudinal path, (c) a brake for applying resistance to rotation of at least one of the axles, and (d) a pair of laterally spaced push handles extending upward from proximate a first longitudinal end of the chassis.

In a second embodiment, the weight training sled includes (a) a chassis having longitudinally spaced first and second ends and laterally spaced first and second sides, (b) at least three ground-contact travel appliances for supporting the chassis a vertical distance above a support surface, and (c) a pair of laterally spaced push handles attached to and extending vertically upward from proximate a first longitudinal end of the chassis, with a portion of each push handle distal to the chassis angled at least 10° downward towards the chassis relative to vertical.

In a third embodiment, the weight training sled includes (a) a chassis having longitudinally spaced first and second ends and laterally spaced first and second sides, (b) at least two ground-contact travel appliances for supporting the chassis a vertical distance above a support surface, and (c) a first pair of laterally spaced push handles attached to and extending vertically upward from proximate a first longitudinal end of the chassis, with a portion of each push handle distal to the chassis angled at least 10° inward towards the other push handle relative to vertical.

In a fourth embodiment, the weight training sled includes (a) a chassis having longitudinally spaced first and second ends and laterally spaced first and second sides, (b) at least two ground-contact travel appliances for supporting the chassis a vertical distance above a support surface, and (c) a pair of laterally spaced push handles attached to and extending vertically upward from proximate a first longitudinal end of the chassis, with the push handles defining a laterally extending gap between axial centers of the push handles whose lateral width increases along a first length of the push handles closer to the chassis, and decreases along a second length of the push handles further from the chassis.

In a fifth embodiment, the weight training sled includes (a) a chassis having longitudinally spaced first and second ends and laterally spaced first and second sides, (b) at least two ground-contact travel appliances for supporting the chassis a vertical distance above a support surface, and (c) a tow hook operable for attachment of a tow rope, spaced at least 30 cm above a support surface upon which the sled is supported.

The following aspects are preferred embodiments of the present invention.
**1.** A wheeled weight training sled, comprising: (a) a chassis having longitudinally spaced first and second ends and laterally spaced first and second sides, (b) at least two longitudinally spaced, fixed-directional wheels for supporting the chassis upon a surface and rotatable for effecting reciprocating travel of the chassis along a substantially linear longitudinal path, (c) a brake for applying bidirectional resistance to rotation of at least one of the wheels, and (d) a pair of laterally spaced push handles extending upward from proximate a first longitudinal end of the chassis.
**2.** The wheeled weight training sled of aspect 1 wherein the pair of laterally spaced push handles is a first pair of laterally spaced push handles, and the sled further comprises a second pair of laterally spaced push handles extending upward from proximate a second longitudinal end of the chassis.
**3.** The wheeled weight training sled of aspect 1 further comprising a means for supporting weight plates on the chassis intermediate the first and second pairs of push handles.
**4.** The wheeled weight training sled of aspect 1 wherein the chassis has a longitudinal length of at least 100 cm.
**5.** The wheeled weight training sled of aspect 1 wherein the chassis has a longitudinal length of between 60 and 150 cm and a lateral width of between 30 and 100 cm.
**6.** The wheeled weight training sled of aspect 1 wherein the chassis has a longitudinal length of between 100 and 140 cm and a lateral width of between 40 and 80 cm.
**7.** The wheeled weight training sled of aspect 1 wherein the chassis has a vertical clearance of between 2 and 20 cm.
**8.** The wheeled weight training sled of aspect 1 wherein the brake is an eddy current brake.
**9.** The wheeled weight training sled of aspect 1 wherein the wheels are pneumatic wheels.
**10.** A tandem axle four wheeled weight training sled, comprising: (a) a chassis having longitudinally spaced first and second ends and laterally spaced first and second sides, (b) a pair of wheels mounted on each of two axles, the wheels supporting the chassis upon a surface and rotatable for effecting reciprocating travel of the chassis along a longitudinal path, (c) a brake for applying resistance to rotation of at least one of the axles, and (d) a pair of laterally spaced push handles extending upward from proximate a first longitudinal end of the chassis.
**11.** The tandem axle four wheeled weight training sled of aspect 10 wherein the pair of laterally spaced push handles is a first pair of laterally spaced push handles, and the sled further comprises a second pair of laterally spaced push handles extending upward from proximate a second longitudinal end of the chassis.
**12.** The tandem axle four wheeled weight training sled of aspect 10 further comprising a first means intermediate the axles and proximate the first longitudinal end of the chassis for supporting at least one weight plate, and a second means intermediate the axles and proximate the second longitudinal end of the chassis for supporting at least one other weight plate.
**13.** The tandem axle four wheeled weight training sled of aspect 10 wherein the chassis has a longitudinal length and the wheelbase is at least 60% of the longitudinal length of the chassis.
**14.** The tandem axle four wheeled weight training sled of aspect 10 wherein the chassis has a longitudinal length and the wheelbase is at least 70% of the longitudinal length of the chassis.
**15.** The tandem axle four wheeled weight training sled of aspect 10 wherein the wheelbase is at least 80 cm.
**16.** The tandem axle four wheeled weight training sled of aspect 10 wherein the wheelbase is between 60 and 100 cm from one another.
**17.** The tandem axle four wheeled weight training sled of aspect 10 wherein the sled has a single brake in operable braking communication with one of the axles.
**18.** The tandem axle four wheeled weight training sled of aspect 10 wherein the sled has two brakes, one in operable braking communication with each of the axles.
**19.** The tandem axle four wheeled weight training sled of aspect 18 wherein braking resistance may be separately and independently set for each brake.
**20.** The tandem axle four wheeled weight training sled of aspect 10 wherein the brake is an eddy current brake.
**21.** The tandem axle four wheeled weight training sled of aspect 18 wherein the brakes are eddy current brakes.
**22.** The tandem axle four wheeled weight training sled of aspect 10 wherein the sled has four brakes, each in operable braking communication with one of the wheels.
**23.** A wheeled weight training sled, comprising: (a) a chassis having longitudinally spaced first and second ends and laterally spaced first and second sides, (b) at least two wheels for supporting the chassis upon a surface and rotatable for effecting travel of the chassis along a path, (c) a brake for applying adjustable resistance to rotation of at least one of the wheels including a neutral resistance setting, and (d) a pair of laterally spaced push handles extending upward from proximate a first longitudinal end of the chassis.
**24.** The wheeled weight training sled of aspect 23 wherein the at least two wheels are rotatable for effecting reciprocating travel of the chassis along the path, and the brake is operable for applying bidirectional resistance to rotation of at least one of the wheels including a neutral resistance setting.
**25.** The wheeled weight training sled of aspect 23 further comprising a basket defining a payload retention chamber configured and arranged for temporary mounting onto the chassis.
**26.** A weight training sled, comprising: (a) a chassis having longitudinally spaced first and second ends and laterally spaced first and second sides, (b) at least two ground-contact travel appliances for supporting the chassis a vertical distance above a support surface, and (c) a first pair of laterally spaced push handles attached to and extending vertically upward from proximate a first longitudinal end of the chassis, with a portion of each push handle distal to the chassis angled at least 10° downward towards the chassis relative to vertical.
**27.** The weight training sled of aspect 26 wherein the downward angled portion of each push handle is a hand grip angled between 15° and 30° downward towards the chassis relative to vertical.
**28.** The weight training sled of aspect 26 wherein the ground-contact travel appliances are runners.
**29.** The weight training sled of aspect 26 wherein the ground-contact travel appliances are wheels and the sled further comprises a brake for applying resistance to rotation of at least one of the wheels.
**30.** The weight training sled of aspect 26 wherein the sled further comprises a second pair of laterally spaced push handles attached to and extending vertically upward from proximate a second longitudinal end of the chassis opposite the first end of the chassis, with a portion of each push handle comprising the second pair of push handles, distal to the chassis angled at least 10° downward towards the chassis relative to vertical.
**31.** The weight training sled of aspect 26 wherein the chassis has a longitudinal length of between 60 and 150 cm and a lateral width of between 30 and 100 cm.
**32.** The weight training sled of aspect 26 wherein the chassis has a longitudinal length of between 100 and 140 cm and a lateral width of between 40 and 80 cm.
**33.** The weight training sled of aspect 26 wherein the chassis has a vertical clearance of between 2 and 20 cm.
**34.** A weight training sled, comprising: (a) a chassis having longitudinally spaced first and second ends and laterally spaced first and second sides, (b) at least two ground-contact travel appliances for supporting the chassis a vertical distance above a support surface, and (c) a first pair of laterally spaced push handles attached to and extending vertically upward from proximate a first longitudinal end of the chassis, with a portion of each push handle distal to the chassis angled at least 10° inward towards the other push handle relative to vertical.
**35.** The weight training sled of aspect 34 wherein the inward angled portion of each push handle is a hand grip angled between 15° and 30° inward towards the other push handle relative to vertical.
**36.** The weight training sled of aspect 34 wherein the ground-contact travel appliances are runners.
**37.** The weight training sled of aspect 34 wherein the ground-contact travel appliances are wheels and the sled further comprises a brake for applying resistance to rotation of at least one of the wheels.
**38.** The weight training sled of aspect 34 wherein the sled further comprises a second pair of laterally spaced push handles attached to and extending vertically upward from proximate a second longitudinal end of the chassis opposite the first end of the chassis, with a portion of each push handle comprising the second pair of push handles, distal to the chassis angled at least 10° inward towards the other push handle relative to vertical.
**39.** The weight training sled of aspect 34 wherein the chassis has a longitudinal length of between 60 and 150 cm and a lateral width of between 30 and 100 cm.
**40.** The weight training sled of aspect 34 wherein the chassis has a longitudinal length of between 100 and 140 cm and a lateral width of between 40 and 80 cm.
**41.** The weight training sled of aspect 34 wherein the chassis has a vertical clearance of between 2 and 20 cm.
**42.** A weight training sled, comprising: (a) a chassis having longitudinally spaced first and second ends and laterally spaced first and second sides, (b) at least two ground-contact travel appliances for supporting the chassis a vertical distance above a support surface, and (c) a first pair of laterally spaced push handles attached to and extending vertically upward from proximate a first longitudinal end of the chassis, defining a laterally extending gap between axial centers of the push handles whose lateral width increases along a first length of the push handles closer to the chassis, and decreases along a second length of the push handles further from the chassis.
**43.** The weight training sled of aspect 42 wherein the distance of the gap changes at least 20% from its smallest distance to its largest distance.
**44.** The weight training sled of aspect 42 wherein the ground-contact travel appliances are runners.
**45.** The weight training sled of aspect 42 wherein the ground-contact travel appliances are wheels and the sled further comprises a brake for applying resistance to rotation of at least one of the wheels.
**46.** The weight training sled of aspect 42 wherein the sled further comprises a second pair of laterally spaced push handles attached to and extending vertically upward from proximate a second longitudinal end of the chassis opposite the first end of the chassis, with the second pair of push handles laterally widening and then laterally converging relative to one another as the push handles comprising the second pair of push handles extend vertically upward.
**47.** The weight training sled of aspect 42 wherein the chassis has a longitudinal length of between 60 and 150 cm and a lateral width of between 30 and 100 cm.
**48.** The weight training sled of aspect 42 wherein the chassis has a longitudinal length of between 100 and 140 cm and a lateral width of between 40 and 80 cm.
**49.** The weight training sled of aspect 42 wherein the chassis has a vertical clearance of between 2 and 20 cm.
**50.** A weight training sled, comprising: (a) a chassis having longitudinally spaced first and second ends and laterally spaced first and second sides, (b) at least two ground-contact travel appliances for supporting the chassis a vertical distance above a support surface, and (c) a tow hook operable for attachment of a tow rope, spaced at least 30 cm above a support surface upon which the sled is supported.
**51.** The weight training sled of aspect 50 wherein the tow hook is spaced between 30 and 90 cm above a support surface upon which the sled is supported.
**52.** The weight training sled of aspect 50 wherein the tow hook is spaced between 30 and 60 cm above a support surface upon which the sled is supported.
**53.** The weight training sled of aspect 50 wherein the tow hook is spaced between 40 and 60 cm above a support surface upon which the sled is supported.
**54.** The weight training sled of aspect 50 wherein the ground-contact travel appliances are runners.
**55.** The weight training sled of aspect 50 wherein the ground-contact travel appliances are wheels and the sled further comprises a brake for applying resistance to rotation of at least one of the wheels.
**56.** The weight training sled of aspect 50 wherein the chassis has a longitudinal length of between 60 and 150 cm and a lateral width of between 30 and 100 cm.
**57.** The weight training sled of aspect 50 wherein the chassis has a longitudinal length of between 100 and 140 cm and a lateral width of between 40 and 80 cm.
**58.** The weight training sled of aspect 50 wherein the chassis has a vertical clearance of between 2 and 20 cm.

### BRIEF DESCRIPTION OF THE DRAWINGS

Figure 1 is a perspective view of one embodiment of the invention.
Figure 2 is a side view of the invention depicted in Figure 1.
Figure 3 is a top view of the invention depicted in Figure 1.
Figure 4 is an end view of the invention depicted in Figure 1.
Figure 5 is an exploded perspective view of the invention depicted in Figure 1.
Figure 6 is an enlarged perspective view of the braking mechanism on the invention depicted in Figure 1.
Figure 6A is an exploded perspective view of the pulley assembly portion of the braking mechanism depicted in Figure 6.
Figure 6B is an exploded perspective view of the tensioning assembly portion of the braking mechanism depicted in Figure 6.
Figure 6C is an exploded perspective view of the eddy disk assembly portion of the braking mechanism depicted in Figure 6.
Figure 6D is an exploded perspective view of the magnetic stator assembly portion of the braking mechanism depicted in Figure 6.
Figure 7 is an exploded perspective view of another embodiment of a magnetic stator assembly useful in the braking mechanism depicted in Figure 6.
Figure 8 is a perspective view of another embodiment of the invention.
Figure 9 is a side view of the invention depicted in Figure 8.
Figure 10 is an end view of the invention depicted in Figure 8.
Figure 11 is a perspective view of yet another embodiment of the invention.

### DETAILED DESCRIPTION OF A PREFERRED EMBODIMENT

### Definitions

As utilized herein, including the claims, the term *"**substantially linear**"* means a maximum orthogonal deviation from a straight line connecting the starting point and ending point of less than 10%. By way of example, movement of the wheeled weight sled of the present invention along a warped path of travel from a starting point to an end point separated by a straight line distance of 20 meters with a maximum side-to-side orthogonal offset from that straight line segment of less than 2 meters is "substantially linear".

As utilized herein, including the claims, the term *"**neutral resistance**"* means resistance at or near zero, whereby the wheeled exercise sled of the present invention is rendered suitable for use as a wheeled transport wagon when the braking mechanism is set to neutral.

**Nomenclature Table**

| **REF. NO.** | **NAME** |
|---|---|
| **100** | Weight Training Sled |
| **101** | First End of Weight Training Sled |
| **102** | Second End of Weight Training Sled |
| **103** | First Side of Weight Training Sled |
| **104** | Second Side of Weight Training Sled |
| **110** | Chassis |
| **111** | First End of Chassis |
| **112** | Second End of Chassis |
| **113** | First Side of Chassis |
| **114** | Second Side of Chassis |
| **115** | Top of Chassis |
| **116** | Bottom of Chassis |
| **117** | First Side Rail of Chassis |
| **117a** | First End of First Side Rail |
| **117b** | Second End of First Side Rail |
| **118** | Second Side Rail of Chassis |
| **118a** | First End of Second Side Rail |
| **118b** | Second End of Second Side Rail |
| **119** | Cross Beams Interconnecting Side Rails |
| **120** | Axles |
| **121** | First Axle |
| **122** | Second Axle |
| **130** | Wheels |
| **131** | First Pair of Wheels |
| **132** | Second Pair of Wheels |
| **140** | Push Handles |
| **140d** | Distal End of Push Handles |
| **140p** | Proximal End of Push Handles |
| **141** | First Pair of Push Handles |
| **142** | Second Pair of Push Handles |
| **143** | Grips on Each Push Handle |
| **145** | Cross Member |
| **148₁** | First Length of the Push Handles |
| **148₂** | Second Length of the Push Handles |
| **149** | Lateral Gap Between Paired Push Handles |
| **149₁** | Largest Gap Between Paired Push Handles Within the First Length |
| **149₂** | Smallest Gap Between Paired Push Handles Within the Second Length |
| **150** | Weight Plate Horns |
| **151** | First Weight Plate Horn |
| **152** | Second Weight Plate Horn |
| **153** | Rubber Bumpers |
| **160** | Tow Hook |
| **200** | Braking Mechanism |
| **201** | First Braking Mechanism |
| **202** | Second Braking Mechanism |
| **210** | Mounting Plate for Braking Mechanism |
| **211** | Axle Passage Orifice |
| **212** | Pulley Assembly Mounting Post |
| **213** | Eddy Disk Assembly Mounting Post |
| **214** | Tensioning System Adjustment Slot |
| **215** | Magnetic Stator Position Adjustment Slot |
| **220** | Drive Sprocket |
| **230** | Pulley Assembly |
| **231** | Internal Hub |
| **232** | Sprocket Mount |
| **233** | Driven Sprocket |
| **234** | Pulley |
| **239** | Drive Chain |
| **240** | Eddy Disk Assembly |
| **241** | Disk Mount |
| **241'** | Shaft of Disk Mount |
| **241"** | Mounting Plate of Disk Mount |
| **242** | Eddy Disk |
| **249** | Drive Belt |
| **250** | Drive Belt Tensioning Assembly |
| **260** | Magnetic Stator Assembly |
| **261** | Magnets |
| **265** | Magnetic Stator Position Adjustment Lever |
| **270** | Shroud for Braking Mechanism |
| **530** | Runners |
| | |
| **α** | Inward Angle from Vertical |
| **β** | Downward Angle from Vertical |
| **x** | Longitudinal Direction |
| **y** | Lateral Direction |
| **z** | Transverse Direction |

### Construction

With reference to the illustrative drawings, the invention is directed to a weight training sled **100** (hereinafter "sled") characterized by one or more of (A) rotatable wheels **130** in contact with ground, (B) curvilinear push handles **140** configured and arranged to (i) provide a comfortable and natural spacing of hand grips **143** on the push handles **140,** (ii) provide a comfortable and ergonomic inward **α** angling of the hand grips **143** on the push handles **140** relative to vertical, and (iii) provide a downward **β** angling of the hand grips **143** on the push handles **140** in order to limit the amount of upward force vector created when a user is pushing the sled **100** and preferably configured and arranged to generate a downward force vector so as to prevent or limit lifting of the work end of the sled **100** off the ground, and (C) a tow hook **160** mounted on the sled **100** to provide a clearance of at least 30 cm to limit the amount of upward force vector created when a user pulls upon a tow rope (not shown) attached to the sled **100** at the tow hook **160** and preferably configured and arranged to generate a downward force vector so as to prevent or limit lifting of the towed end of the sled **100** off the ground.

### Wheeled Sled

The wheeled sled **100** includes a chassis **110,** at least two fixed-directional wheels **130,** a pair of push handles **140,** and at least one braking mechanism **200.** The wheeled sled **100** preferably includes (i) four fixed-directional wheels **130,** mounted upon a pair of axles **120** so as to form a tandem axle four wheeled weight training sled **100,** and (ii) at least one and preferably two weight plate horns **150.**

The wheeled sled **100** has longitudinally **x** spaced first and second ends **101** and **102,** and laterally **y** spaced first and second sides **103** and **104.**

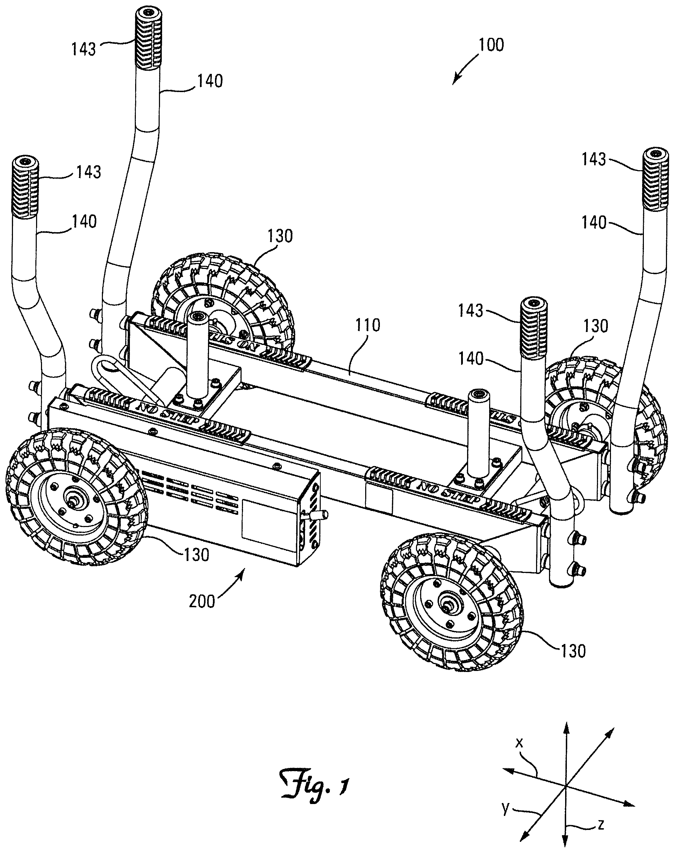

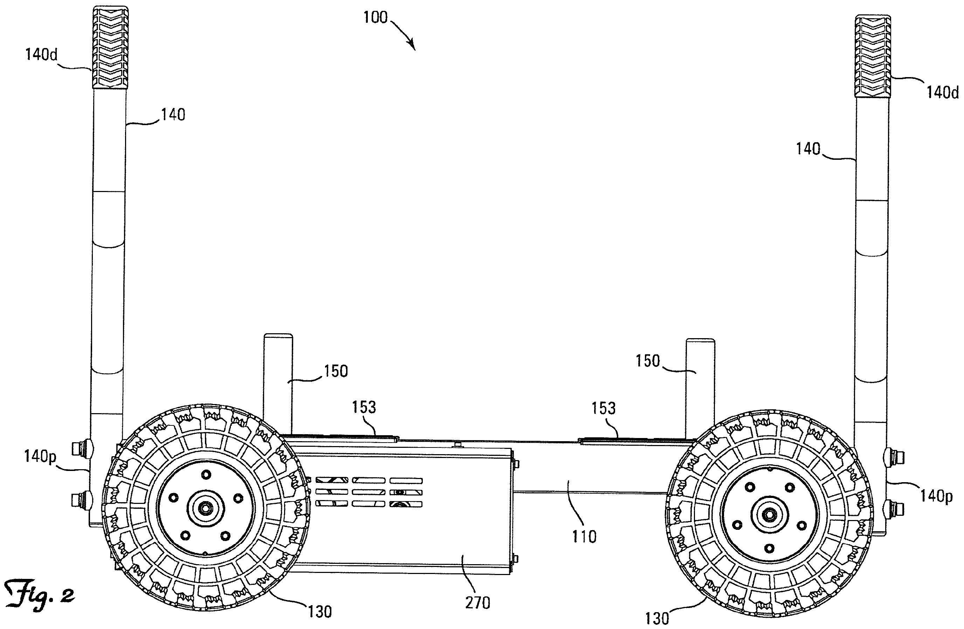

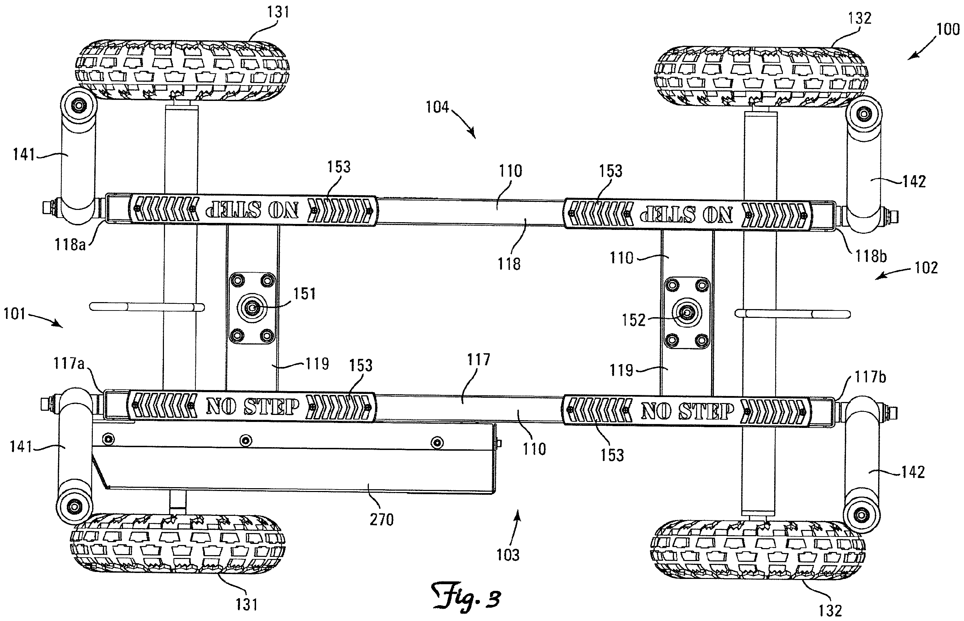

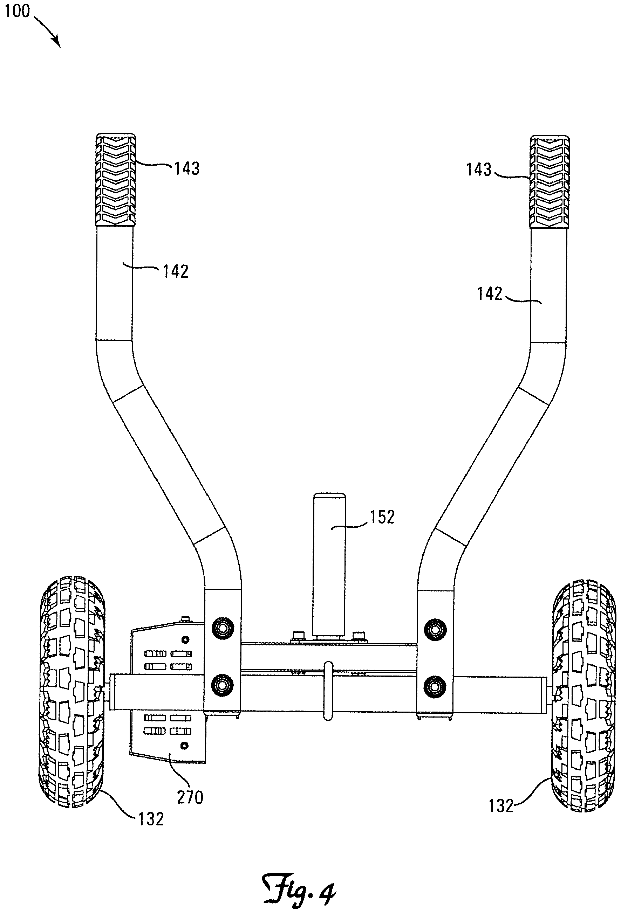

A preferred chassis **110,** depicted in Figures 1-5, is a metal structure having first and second longitudinally **x** elongated and laterally **y** spaced side rails **117, 118** rigidly interconnected by cross-beams **119,** defining a chassis **110** with first and second longitudinal ends **111** and **112,** first and second lateral sides **113** and **114,** and a transverse top **115** and bottom **116.**

The wheels **130** are fixed-directional wheels **130** rotatably mounted to the chassis **110** for supporting the bottom **116** of the chassis **110** a distance above a surface (hereinafter referenced as "clearance"). The fixed-directional and longitudinal spacing of at least two of the wheels **130** constrains the chassis **110** to reciprocating travel upon a surface along a substantially linear longitudinal **x** path.

When two wheels **130** are employed they are preferably longitudinally **x** aligned in the midsagittal plane of the sled **100.** When three wheels **130** are employed they are preferably spaced at the corners of an isosceles triangle with two of the wheels **130** laterally **y** aligned proximate one end **101** of the sled **100** and the third centrally positioned proximate the other end **102** of the sled **100.** When four wheels **130** are employed, as depicted in Figures 1-5, the wheels **130** are mounted in laterally **y** spaced pairs **131** and **132** upon each of two laterally **y** extending axles **121** and **122** respectively, with the axles **121** and **122** mounted proximate each longitudinal end **101** and **102** of the sled **100** respectively, and the wheels **130** in each pair of wheels **131** and **132** mounted proximate opposite sides **103** and **104** of the sled 100. The four wheel embodiment is generally preferred as it provides enhanced stability, enhanced linear travel along the longitudinal **x** path, and facilitates exercise in both directions along the linear path of travel. Alternatively, the four wheel embodiment may employ a pair of longitudinally **x** aligned and laterally **y** centered wheels **130** proximate the longitudinal ends **101** and **102** of the sled **100,** with a vertically **z** raised or vertically **z** aligned outrigger wheel **130** extending from each side **103** and **104** of the sled **100.**

The wheels **130** are preferably pneumatic wheels **130** with good traction in order to limit undesired sliding of the wheels **130** across the floor during exercise as opposed to desired rotation of the wheels **130.**

At least one pair of laterally **y** spaced push handles **140** are attached proximate a proximal end **140p** of the push handles **140,** proximate one end **111** or **112** of the chassis **110** for being gripped by a user to push the sled **100.** As depicted in Figures 1-5, the sled **100** preferably includes two pair of push handles **141** and **142,** with a first pair of push handles **141** secured to the first ends **117a** and **118a** of the chassis side rails **117** and **118,** and a second pair of push handles **142** secured to the second ends **117b** and **118b** of the chassis side rails **117** and **118.** This allows a user to exercise by pushing the sled in either direction along the longitudinal **x** path of travel.

One or more weight plate horns **150** can be provided on the chassis **110** for mounting weight plates (not shown) onto the top **115** of the chassis **110** in order to increase exercise resistance offered by the sled **100** and, more importantly, counteract any upward lifting force vector exerted by a user that would tend to lift an end of the sled **100** and thereby lift the wheel(s) **130** closest to the user off the floor. As depicted in Figures 1-5, the preferred embodiment has first and second weight plate horns **151** and **152** positioned along the midsaggital plane of the sled **100,** each secured to a cross beam **119** proximate each end **111** and **112** of the chassis **110.** Rubber bumpers **153** can be provided atop the chassis **115** proximate each horn **151** and **152** for cushioning and protecting the chassis **110** when weight plates are added to or removed from the horns **150.**

Referring generally to Figures 1-5, a braking mechanism **200** is attached to the chassis **110** and in communication with at least one of the wheels **130,** preferably in communication with a pair of wheels **130** mounted on the same axle **120,** for exerting a bidirectional controlled variable resistive force against rotation of the wheel(s) **130** along the longitudinal **x** path of travel. Separate braking mechanisms **201** and **202** can be provided for each wheel **130** or each axle **120,** and is preferred when the sled **100** is designed with push handles **140** at each end **101** and **102** for bidirectional resistive travel. Many types of resistance devices are known such as braking motors, generators, brushless generators, eddy current systems, magnetic systems, alternators, tightenable belts, friction rollers, fluid brakes, etc., any of which could be effectively utilized in the present invention. A braking mechanism capable of providing progressive resistance based upon acceleration or speed of travel is generally preferred.

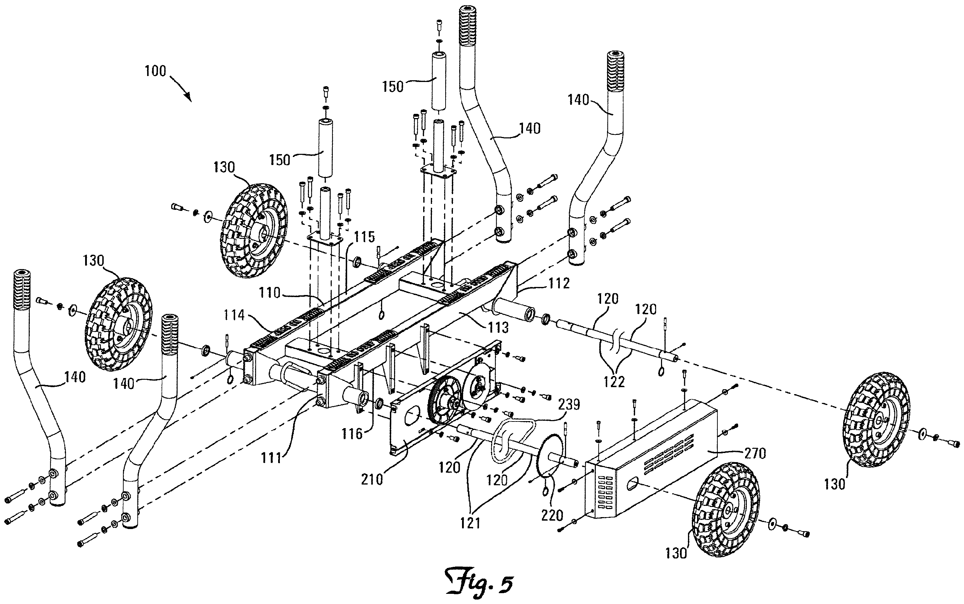

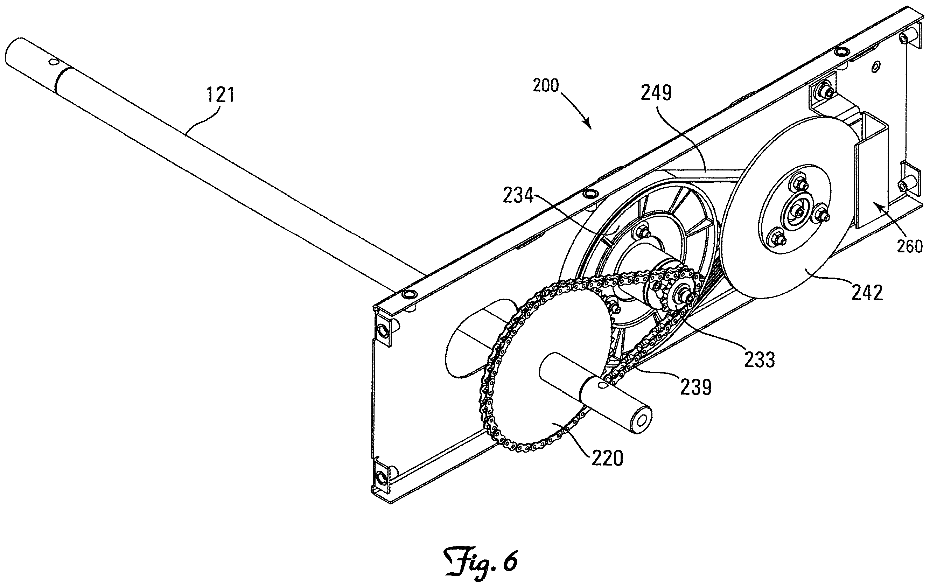

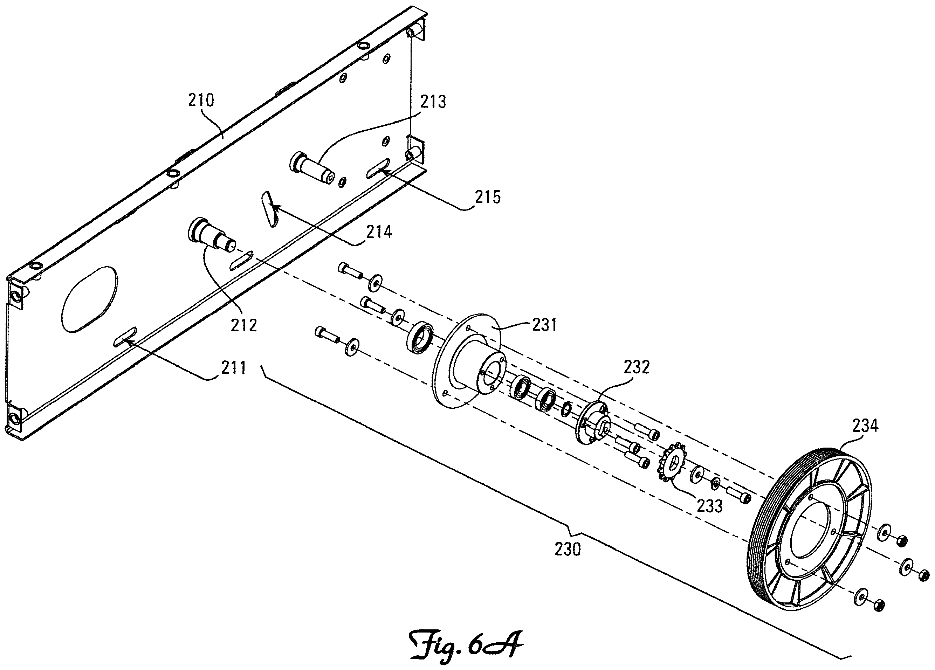

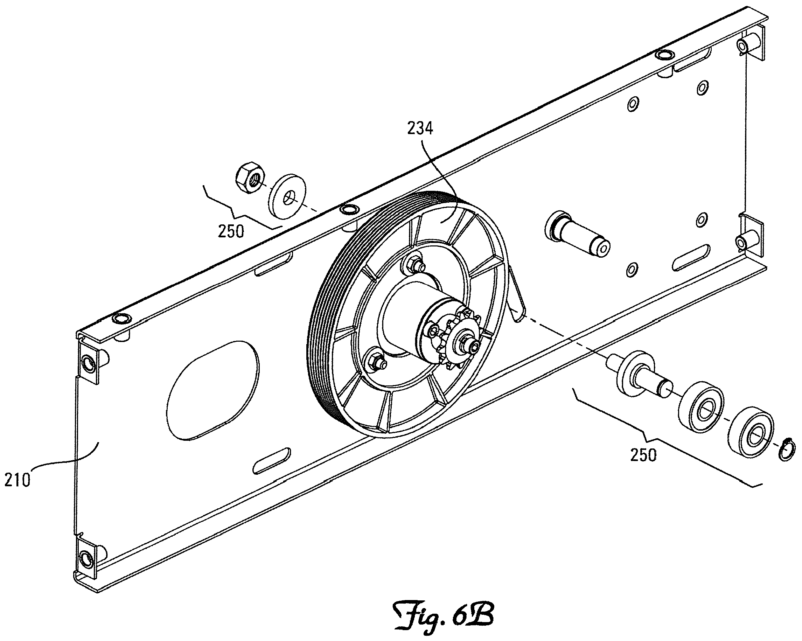

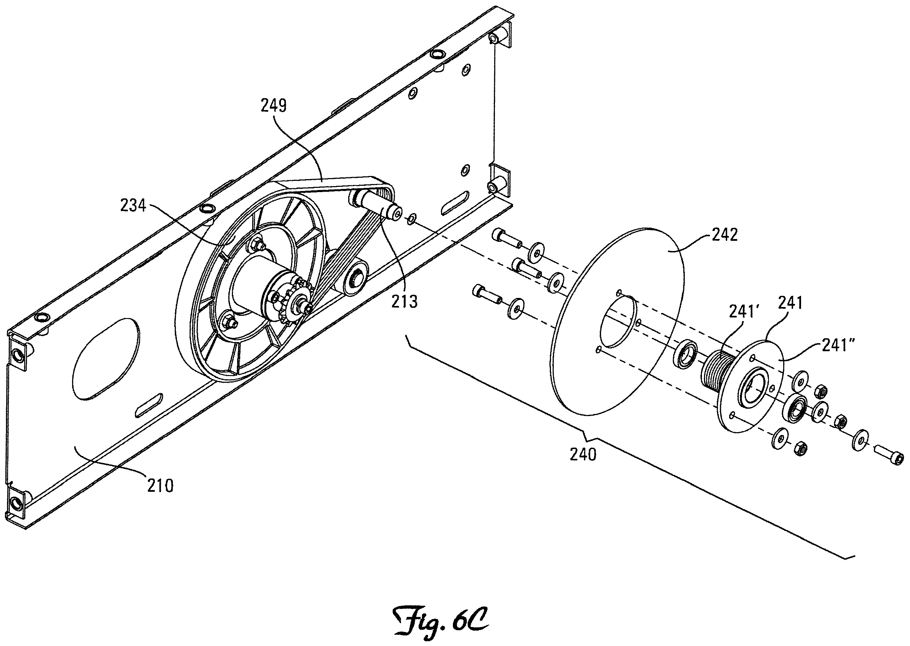

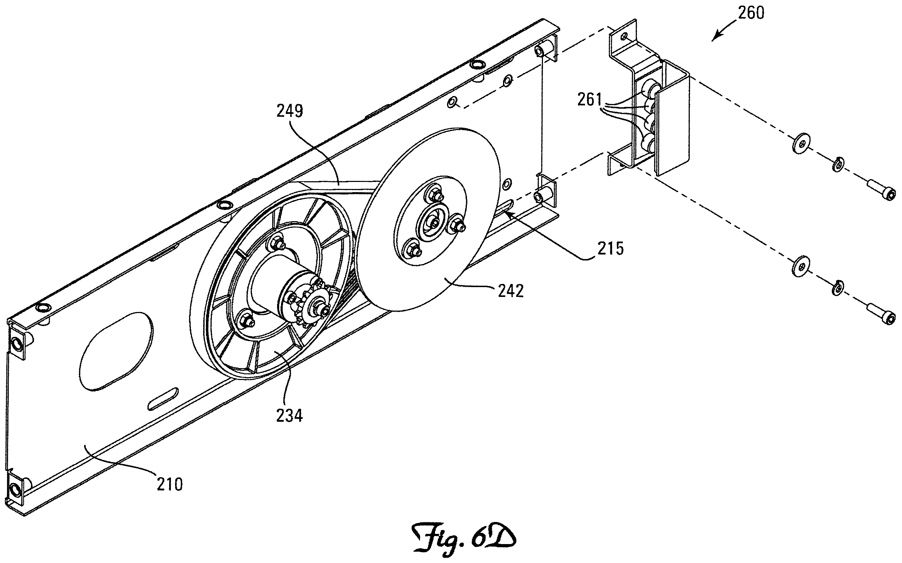

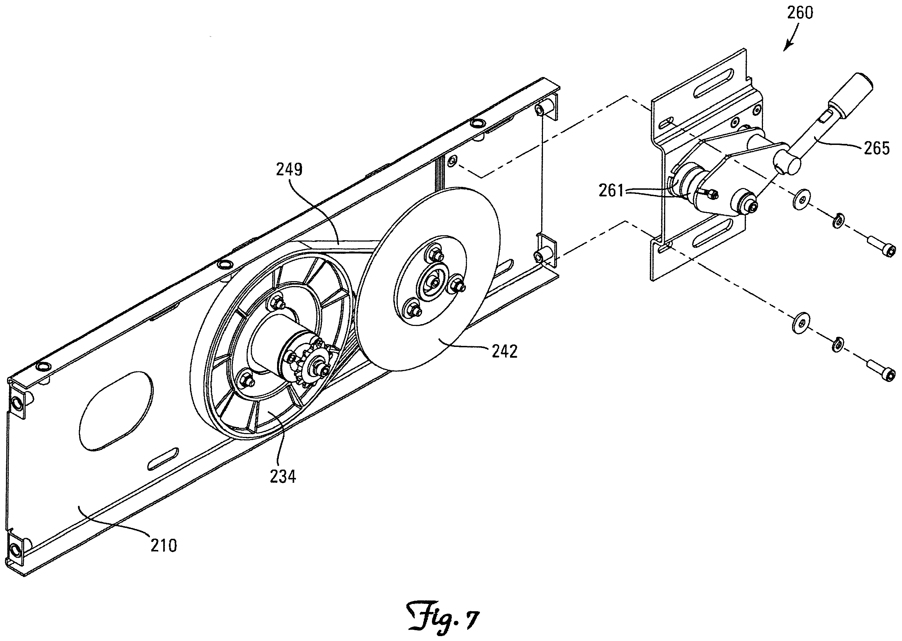

In further detail, and in reference to Figure 6, the preferred braking mechanism **200,** is an eddy current brake **200** mounted to a first side rail **117** of the chassis **110** for exerting resistance to rotation of a first axle **121.** The eddy current brake **200,** depicted fully assembled in Figure 6 and depicted component-by-component in Figures 6A-6D, includes (i) a mounting plate **210** rigidly attached to the chassis **110** (Figure 5), (ii) a drive sprocket **220** rotatably with and secured to a portion of the first axle **121** extending through an orifice **211** in the mounting plate **210** (Figure 6), (iii) a pulley assembly **230** (Figure 6A) with a pulley **234** and driven sprocket **233** rotatably mounted via an internal hub **231** and a sprocket mount **232** onto a first mounting post **212** projecting from the mounting plate **210** in rotatable driven communication with the drive sprocket **220** via a drive chain **239** (Figure 6), (iv) an eddy disk assembly **240** comprised of an eddy disk **242** rotatably mounted via a disk mount **241** having a shaft **241'** and mounting plate **241"** onto a second mounting post **213** projecting from the mounting plate **210** in rotatable driven communication with the pulley assembly **230** via a drive belt **249** (Figure 6C), (v) a drive belt tensioning assembly **250** secured within an adjustment slot **214** in the mounting plate **210** for adjustably tensioning the drive belt **249** (Figure 6B), and (vi) a magnetic stator assembly **260** secured to the mounting plate **210** for manual (as shown) or automatic (not shown) repositioning of the magnets **261** relative to the eddy disk **242** of the eddy disk assembly **240** via an adjustment slot **215** in the mounting plate **210** as depicted in Figure 6D or a multi-stop lever **265** as depicted in Figure **7****,** to increase or decrease resistance as desired.

In a preferred embodiment the braking mechanism **200** is adjustable into a neutral resistance setting, whereby the sled **100** is effectively converted from an exercise sled to a transport wagon. The neutral setting facilitates movement of the sled **100** from one location to another, such as transport back and forth between a storage location and a use location. When in the neutral resistance setting, and equipped with a removable basket, the sled **100** is effective for use in transporting items such as additional exercise equipment to be used in an exercise workout, from one location to another. The neutral setting preferably applies some modest resistance to rotation of the wheels which does not appreciably interfere with transport of the sled **100** but is effective for preventing or at least slowing down gravity induced movement of the sled **100.**

A protective shroud **270** may be provided over the components of each braking mechanism **201** and **202**.

### Curvilinear Push Handles

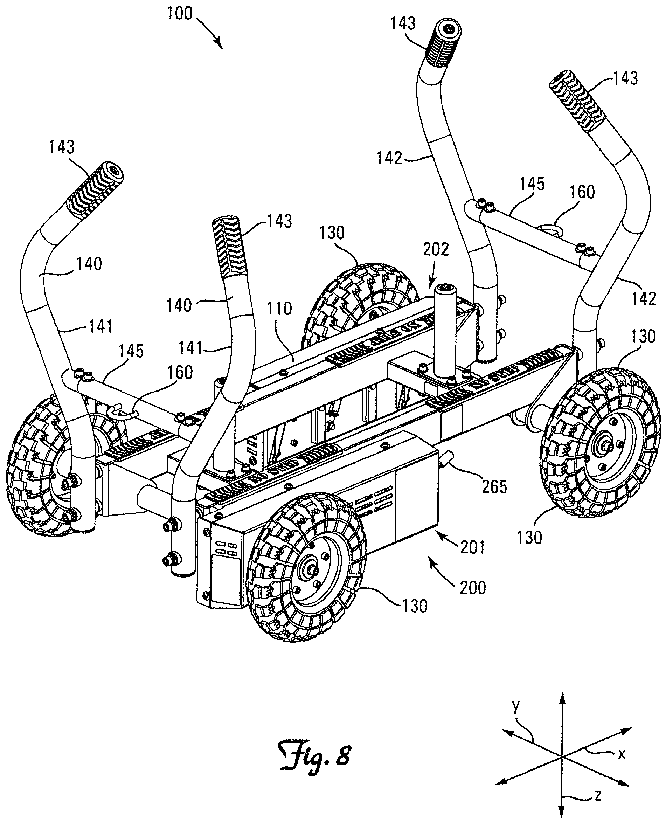

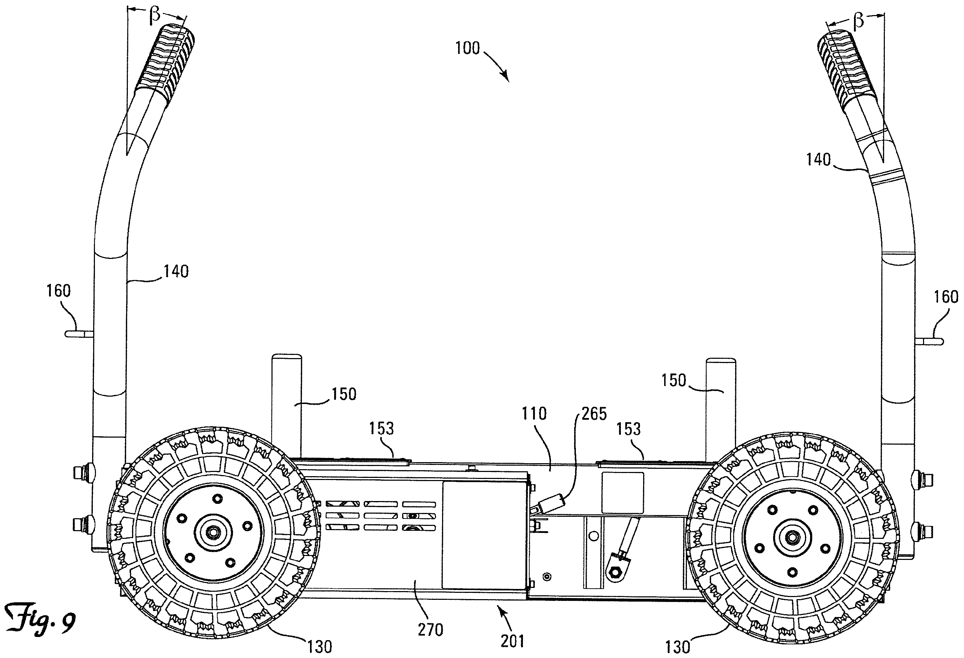

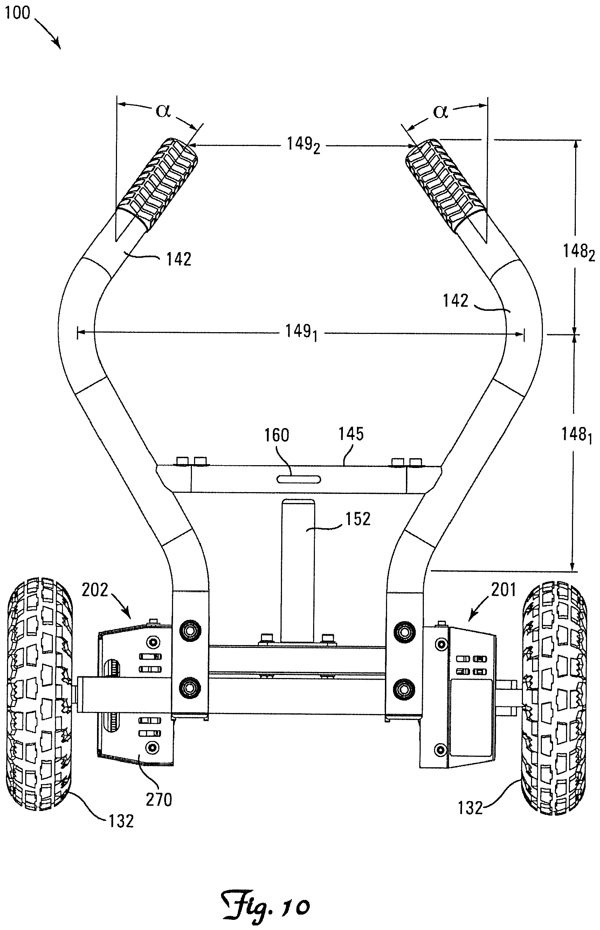

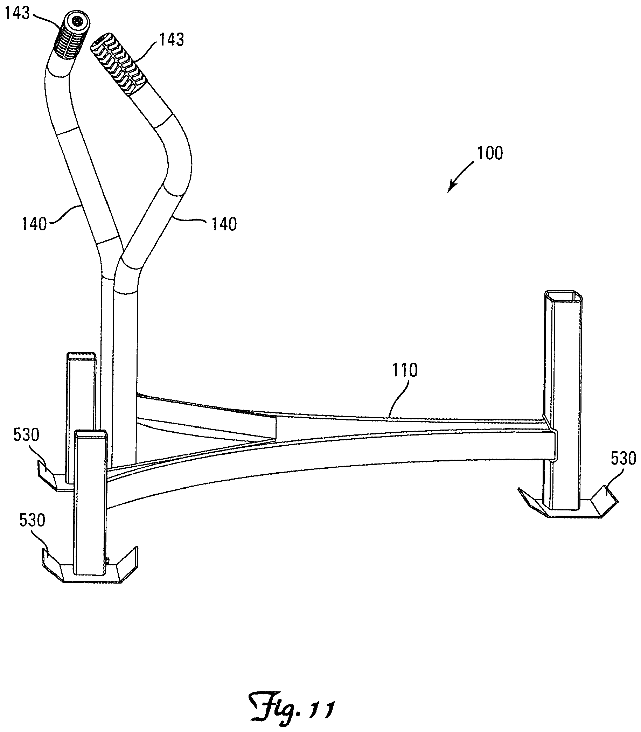

Referring to Figures 8-11, each pair of laterally **y** spaced push handles **140** are preferably curvilinear so as to provide (A) grips **143** proximate the distal ends **140d** of the push handles **140** that angle inward **α** towards one another and downward **β** towards the chassis **110,** and/or (B) a laterally **y** extending gap **149** between axial centers of paired push handles **140** whose lateral **y** width increases along a first length **148₁** of the paired push handles **140** closer to the chassis **110,** and decreases along a second length **148₂** of the paired push handles **140** further from the chassis **110,** defining a largest gap **149₁** between the paired push handles **140** within the first length **148₁** and a smallest gap **149₂** between the paired push handles **140** within the second length **148₂**.

Inward **α** angling of the grips **143** provides a more natural ergonomic rotational gripping position, while downward **β** angling of the grips **143** redirects at least some of the vertical force vector created when a user is pushing the sled **100** from an upwardly directed force vector to a downwardly directed force vector, thereby preventing or at least limiting lifting of the work end of the sled **100** off the ground.

The grips **143** each preferably have an inward angle **α** of at least 10°, preferably between 15° and 30°, and a downward angle **β** of at least 10°, preferably between 15° and 30°.

The curvilinear angling of each paired set of push handles **140** preferably provides a change of at least 20% in the lateral **y** width of the gap **149** from the smallest width **149₂** to the largest width **149₁** (*e.g.,* for a smallest width **149₂** of 20 cm the largest width **149₁** would be at least 24 cm). This change in lateral **y** width of the gap **149** is preferably between 20% and 40%.

Such curvilinear push handles **140** are suitable for use with most types of exercise sled **100,** including typical friction sleds that ride on runners **530** and wheeled sleds described herein.

### Elevated Tow Rope Hook

Referring to Figures 8-10, each pair **141** and **142** of laterally **y** spaced push handles **140** can be interconnected by a cross member **145,** located a longitudinal **x** distance above the chassis **110.** This cross member **145** provides both stabilization of the paired push handles **140** and an elevated position for attachment of a tow rope (not shown) to the sled **100.** A tow hook **160** preferably extends longitudinally **x** outward from the lateral **y** center of each cross member **145** to facilitate temporary attachment of a tow rope (not shown). The cross member **145,** particularly when positioned at the very distal ends **140d** of the paired push handles **140,** can be gripped by a user pushing the sled **100** as an alternative gripping position.

The cross member **145,** and thereby the tow hook **160,** is preferably located so as to provide a clearance of at least 30 cm between the tow hook **160** and ground. Such elevated positioning of the tow hook **160** serves to limit the amount of upward force vector created when a user pulls upon a tow rope (not shown) attached to the sled **100** at the tow hook **160,** thereby limiting and potentially eliminating lifting of the towed end of the sled **100** off the ground.

### Dimensions

Various acceptable, preferred and most preferred dimensions having some significance to the value and/or performance of the sled **100** are provided below.

| Dimension | Acceptable *(cm)* | Preferred *(cm)* | Most Preferred *(cm)* |
|---|---|---|---|
| Chassis | | | |
| Longitudinal Length of Chassis | 60-150 | > 100 | 100-140 |
| Lateral Width of Chassis | 30-100 | 40-80 | 50-60 |
| Transverse Height of Chassis | 3-30 | 5-20 | 10-20 |
| Clearance | >2 | 5-20 | 10-15 |
| Wheels | | | |
| Wheelbase | 60-100 | >80 | 80-100 |
| Track | 40-100 | 60-100 | 80-100 |
| Push Handles | | | |
| Height relative to Floor | 40-120 | 50-100 | 60-100 |
| Lateral Spacing at Top End | 70-120% of Track | 80-100% of Track | 80-90% of Track |

### Use

The sled **100** can be conveniently and safely used in a confined space as small as 1.2 meters wide and 5 meters long, by (i) setting the braking mechanism(s) **200** to the desired resistance, (ii) standing at the first end **101** of the sled **100,** (iii) leaning forward and gripping the first pair of push handles **141,** (iv) pushing the sled **100** in a first longitudinal x direction along a longitudinal path, (v) walking around the sled **100** to the second end **102** of the sled **100,** (vi) leaning forward and gripping the second pair of push handles **142,** (vii) pushing the sled **100** in a second longitudinal x direction back along the longitudinal path, (viii) walking back around the sled **100** to the first end **101** of the sled **100,** and (ix) repeating steps (iii)-(viii) for as many reps as desired.

## Claims

1. A weight training sled (100), comprising: (a) a chassis (110) having longitudinally spaced first and second ends (111, 112) and laterally spaced first and second sides (113, 114), (b) at least two ground-contact travel appliances (130, 530) for supporting the chassis (110) a vertical distance above a support surface, and (c) a first pair of laterally spaced push handles (141) attached to and extending vertically upward from proximate a first longitudinal end (111) of the chassis and defining a laterally extending gap (149) between axial centers of the push handles (141), the pair of push handles (141) configured and arranged with a lateral width between the axial centers of the push handles (141) that increases along a first length (148₁) of the push handles (141) closer to the chassis (141), and decreases along a second length (148₂) of the push handles (141) further from the chassis (110).

2. The weight training sled (100) of claim 1 wherein the ground-contact travel appliances (130, 530) are runners (530).

3. The weight training sled (100) of claim 1 wherein the ground-contact travel appliances (130, 530) are wheels (130) and the sled (100) further comprises a brake (200) for applying resistance to rotation of at least one of the wheels (130).

4. The weight training sled (100) of claim 1 wherein the sled further comprises a second pair of laterally spaced push handles (142) attached to and extending vertically upward from proximate a second longitudinal end (112) of the chassis (110) opposite the first end (111) of the chassis (110).

5. The weight training sled (100) of claim 1 wherein the chassis (110) has a longitudinal length of between 60 and 150 cm and a lateral width of between 30 and 100 cm.

6. The weight training sled (100) of claim 1 wherein the chassis (110) has a longitudinal length of between 100 and 140 cm and a lateral width of between 40 and 80 cm.

7. The weight training sled of claim 1 wherein the chassis (110) has a vertical clearance of between 2 and 20 cm.

8. The weight training sled (100) of claim 1 wherein the distance of the gap (149) changes at least 20% from its smallest distance (149₂) to its largest distance (149₁).

9. The weight training sled (100) of claim 1 wherein the sled (100) further comprises a second pair of laterally spaced push handles (142) attached to and extending vertically upward from proximate a second longitudinal end (112) of the chassis (110) opposite the first end (111) of the chassis (110), with the second pair of push handles (142) laterally widening and then laterally converging relative to one another as the push handles (140) comprising the second pair of push handles extend vertically upward.

10. The weight training sled (100) of claim 3, wherein the brake is a brake capable of providing progressive resistance based upon acceleration or speed of travel.

11. The weight training sled (100) of claim 3 or 10, wherein the brake is an eddy current brake.
